Europäisches Patentamt

European Patent Office

Office européen des brevets

(11) Publication number: **0 119 619**
**A1**

## (12) EUROPEAN PATENT APPLICATION

(21) Application number: **84102978.8**

(22) Date of filing: **17.03.84**

(51) Int. Cl.³: **G 11 B 5/70**

(30) Priority: **20.03.83 JP 46173/83**

(43) Date of publication of application: **26.09.84**
**Bulletin 84/39**

(84) Designated Contracting States: **DE GB**

(71) Applicant: **Hitachi Maxell Ltd., No 1-1-88, Ushitora Ibaraki-shi, Osaka-fu (JP)**

(72) Inventor: **Kawarai, Seigi, No. 11-306, Ohara-cho 3-chome, Ashiya-shi Hyogo-ken (JP)**
Inventor: **Kuse, Sadamu, No. 12-17, Sakurai 3-chome, Minoh-shi Osaka-fu (JP)**

(74) Representative: **von Kreisler, Alek, Dipl.-Chem. et al, Deichmannhaus am Hauptbahnhof, D-5000 Köln 1 (DE)**

(54) **Magnetic recording medium.**

(57) A magnetic recording medium having good dispersibility of magnetic particles and good wear resistance comprising a substrate and a magnetic coat provided thereon, said magnetic coat being composed of magnetic particles dispersed in a binder ingredient, and said binder ingredient being a mixture of a low molecular weight nitrocellulose having a weight-average molecular weight of not more than 40,00 and at least one polymer material selected from the group consisting of polyurethane resins, acrylonitrile-butadiene copolymer resins, chlorinated rubber, polyester resins, polyamide resins, epoxy resins and vinyl chloride resins.

1

## MAGNETIC RECORDING MEDIUM

The present invention relates to a magnetic recording medium such as a magnetic tape suitable for sound recording and video recording. More particularly, the magnetic recording medium of the present invention has a magnetic layer or coat being excellent in both dispersibility of magnetic particles and wear resistance.

Usually, a magnetic recording medium is prepared by applying a magnetic composition composed of magnetic particles, a binder ingredient, an organic solvent and other necessary ingredients onto a substrate or base such as a polyester film and drying the composition to form a magnetic layer on the surface of the substrate. As the binder ingredient to be used, it is required to choose such a binder as it can produce good dispersibility of magnetic particles and good surface smoothness of the magnetic layer to provide excellent electrical properties, e.g., high sensitivity, high S/N ratio and the like, to the magnetic recording medium as well as can produce good wear resistance.

It has been known that, among the binder resins used at present, nitrocellulose is relatively good in respect of the above characteristics. However, it is still insufficient. Particularly, when magnetic particles having active surfaces such as metallic magnetic particles and the like are used, a part of nitrocellulose reacts with the surfaces of the particles and tends to cause gelation of the magnetic composition.

Thus, it is very difficult to fully disperse magnetic particles in a magnetic layer or coat to obtain good dispersibility of magnetic particles in the layer.

In order to improve such disadvantage, we have intensively studied. As the result, we have found that, when a low molecular weigh nitrocellulose having a weight-average molecular weight of not more than 40,000 is used, dispersibility of magnetic particles can be remarkably improved without gelation of a magnetic composition in comparison with a conventional nitrocellulose which has a relatively high molecular weight. However, wear resistance has been still insufficient. Then, we have further studied. As the result, it has been further found that, when the above nitrocellulose having a weight-average molecular weight of not more than 40,000 is used in combination with at least one polymer material selected from the group consisting of polyurethane resins, acrylonitrile-butadiene copolymer resins, chlorinated rubber, polyester resins, polyamide resins, epoxy resins and vinyl chloride resins, dispersibility of magnetic particles and surface smoothness of the resulting magnetic layer are fully improved and, at the same time, wear resistance of the magnetic layer is also improved to obtain a magnetic recording medium being excellent in both electrical properties and durability.

The main object of the present invention is to provide a magnetic recording medium having a magnetic layer or coat being excellent in both dispersibility of magnetic particles and wear resistance.

This object as well as other objects and advantages of the present invention will become apparent to those skilled in the art from the following description.

According to the present invention, there is provided a magnetic recording medium having a magnetic layer or coat formed from a magnetic composition comprising nitrocellulose having a weight-average molecular weight of not more than 40,000, at least one polymer material selected from the group consisting of polyurethane resins, acrylonitrile-butadiene copolymer resins, chlorinated rubber, polyester resins, polyamide resins, epoxy resins and vinyl chloride resins, magnetic particles and an organic solvent.

Nitrocellulose used in the present invention is a low molecular weight nitrocellulose having a weight-average molecular weight of not more than 40,000. When the weight-average molecular weight of nitrocellulose is higher than this, a magnetic composition prepared by using the nitrocellulose with magnetic particles may show very high viscosity or may cause gelation. However, when the low molecular weight nitrocellulose is used, such defects can be removed, and good affinity for magnetic particles and improved dispersibility of magnetic particles can be obtained. As the result, the magnetic layer formed shows good surface smoothness and magnetic properties or electromagnetic transducing properties thereof can be fully improved. Preferably, the low molecular weigh nitrocellulose has a weight-average molecular weight of not more than 30,000. Examples of the low molecular weight nitrocellulose include Nitrocellulose Cellunova EX-2 (nitrocellulose having the weight-average molecular weight of 23,900 manufactured by Asahi Kasei Co., Japan) and the like.

The polymer material to be used in combination with the nitrocellulose, i.e., any of polyurethane resins, acrylonitrile-butadiene copolymer resins, chlorinated rubber, polyester resins, polyamide resins, epoxy resins and vinyl chloride resins has good toughness and good miscibility with the nitrocellulose having a weight-average molecular weight of not more than 40,000 and provide adequate strength to the magnetic layer to improve wear resistance thereof.

As the polyurethane resin, there can be used any polyurethane resin the molecular weight of which can ranges from low to high such as from 1,000 to 100,000. Examples of the polyurethane resin include Takenate L-1007, Takenate L-2710, Takerack E-551T and Takerack E-550 (urethane prepolymers manufactured by Takeda Chemical Industries, Japan) as well as Pandex T-5250, Pandex T-5201 and Pandex T-5205 (urethane elastomers manufactured by Dainippon Ink Co., Japan). Further, since the polyurethane resin can be formed in situ in the magnetic composition by a reaction of the corresponding raw materials thereof, i.e., a low molecular weight polyol and an isocyanate compound, in view

of obtaining high dispersibility of magnetic particles and high elasticity of the magnetic layer, it is preferable to form the polyurethane resin in situ in the magnetic composition by kneading and dispersing magnetic particles and the raw materials of the polyurethane resin in the presence of the above cellulosic resin to react the raw materials. According to this manner, since the above cellulosic resin and the resulting polyurethane resin surround magnetic particles and form a tough matrix to give the magnetic layer having very high modulus of elasticity. Thus, even if it is necessary to make a magnetic tape thinner (e.g., less than $5 \mu m$) according to the request of high density recording (e.g., more than 4MHz frequency), the resulting tape shows remarkable improved traveling properties. In this case, in order to obtain the magnetic coat having particularly high modulus of elasticity, it is necessary to use a low molecular weight polyol. Preferred examples of the low molecular weight polyol include acrylic polyols, polyester polyols and polyether polyols each of which has an average molecular weight of not more than 700 and a hydroxyl number of not less than 200. Examples of the polyester polyol include Adeka New Ace YT-400 (polyester polyol having average molecular weight of 400 and hydroxyl number of 580 manufactured by Asahi Denka Co., Japan) and the like. Examples of the polyether polyol include Sannix TP-400 (polyether polyol having average molecular weight of 400 and hydroxyl number of 430 manufactured by Sanyo Kasei Co., Japan). Further, as the isocyanate compound, there can

G    0119619

be used 1-methylbenzol-2,4,6-triisocyanate, triphenylmethane-4,4',4"-triisocyanate, trimethylolpropane tolylene diisocyanate, isophorone diisocyanate or an adduct thereof or the like. Examples of the isocyanate compound include Colonate L (trifunctional low molecular weight isocyanate compound manufactured by Nippon Polyurethane Kogyo, Japan), Takenate D102 (urethane prepolymer manufactured by Takeda Chemical Industries, Japan), Desmodur L (trifunctional low molecular weight isocyanate compound manufactured by Bayer, Germany), Crisbon NX (manufactured by Dainippon Ink Co., Japan) and Maitekku NY (trifunctional alicyclic isocyanate manufactured by Mitsubishi Kasei, Japan). The low molecular weight polyol and the polyisocyanate compound can be used in such an amount that the magnetic coat formed by the curing reaction of the polyol and the isocyanate is non-adherent. In this case, they are used in such a proportion that 0.8 to 1.2 equivalent of hydroxyl group is present per one equivalent of isocyanate and, preferably, the weight ratio of the polyol : the polyisocyanate compound being 3 : 1 to 1 : 7.

Examples of the acrylonitrile-butadiene copolymer resin include acrylonitrile-butadiene copolymer, acrylonitrile-butadiene-styrene copolymer and the like and examples of the commercially available resins are Nippol 1432J (manufactured by Nippon Zeon Co., Japan), Tafurekkusu 400 (manufactured by Mitsubishi Monsant Co., Japan) and the like.

Examples of the polyester resin include Biron #200 (manufactured by Toyo Boseki KK, Japan), Crisbon 6019 (manufactured by Dainippon Ink Co., Japan) and the like.

Examples of the polyamide resin include Versamid V-125 (manufactured by Morbay Chemical), Elvamide 8061 ( manufactured by DuPont, U.S.A.) and the like.

Examples of the epoxy resin include Epichron 800 and Eposizer W100EL (manufactured by Dainippon Ink Co., Japan), Adeka Resin EPU-2 (manufactured by Asahi Denka Co., Japan) and the like.

Examples of the vinyl chloride resin include vinyl chloride-vinyl acetate copolymer, vinyl chloride-vinyl acetate-vinyl alcohol copolymer, vinyl chloride-vinyl acetate-maleic acid copolymer, vinyl chloride-vinyl propionate copolymer and the like. Examples of the commercially available vinyl chloride resins are VYHH, VAGH and VMCH (manufactured by U.C.C., U.S.A.), Esreck A, Esreck CN (manufactured by Sekisui Chemical Co., Japan), Ryulon QS-430 and Ryulon QA-431 (manufactured by Toyo Soda Co., Japan) and the like.

In the present invention, these polymer materials, i.e, polyurethane resins, acrylonitrile-butadiene copolymer resins, chlorinated rubber, polyester resins, polyamide resins, epoxy resins and vinyl chloride resins can be used alone or in combination thereof and it is preferable to use the above nitrocellulose having a weight-average molecular weight of not more than 40,000 and at least one of the polymer materials in a weight ratio of the nitrocellulose :

the polymer material ranging from 1 : 95 to 25 : 75. When the amount of the nitrocellulose is too small, improvement of dispersibility of magnetic particles is insufficient. When the amount of the nitrocellulose is too large, the resulting magnetic tape is liable to cause curling.

In the present invention, in addition to the above binder resins, there can be added an isocyanate compound such as that described in the above to the magnetic composition. When the isocyanate compound is added to the magnetic composition, the binder resins are cross-linked with the isocyanate compound and thereby strength of the magnetic layer formed is further improved which results in further improvement of wear resistance of the magnetic layer. Preferably, the isocyanate compound to be cross-linked with the binder resins can be used in an amount ranging from 1 to 40 % by weight based on the total amount of the binder ingredient. When the amount of the isocyanate compound is less than 1 % by weight, improvement of wear resistance of the magnetic layer is insufficient. When the amount is more than 40 % by weight, too much cross linkings are formed and the resulting magnetic layer becomes hard and brittle.

As the magnetic particles, there can be used various known magnetic particles including $\gamma$-Fe$_2$O$_3$ particles, Fe$_3$O$_4$ particles, Co-containing $\gamma$-Fe$_2$O$_3$ particles, Co-containing Fe$_3$O$_4$ particles, CrO$_2$ particles, Fe particles, Fe-Ni particles and the like. Particularly, the present invention is very favorable for using metallic particles.

As the organic solvents, there can be used methyl isobutyl ketone, methyl ethyl ketone, cyclohexanone, toluene, ethyl acetate, tetrahydrofuran, dimethylformamide and the like. These organic solvents can be used alone or in the combination thereof.

Optionally, in the present invention, additives commonly used such as dispersing agents, lubricants, polishing agents, antistatic agents and the like can be added to the magnetic composition.

The magnetic composition used in the present invention can be prepared by a conventional method such as kneading and dispersing the desired ingredients.

The magnetic recording medium of the present invention can be prepared according to a conventional method. For example, the magnetic recording medium of the present invention can be prepared by applying the magnetic composition composed of the above binder resins, magnetic particles, the organic solvent and other additives onto a conventional substrate such as a polyester film by an appropriate manner, e.g., spray coating or roll coating and then drying the composition. The nitrocellulose having a weight-average molecular weight of not more than 40,000 can be included in the magnetic layer by surface treatment of the magnetic particles with it.

The following examples further illustrate the present invention in detail but are not to be construed to limit the scope thereof.

70

Example 1

| Ingredients | Parts by Weight |
|---|---|
| $\alpha$-Fe magnetic particles | 100 |
| Pandex T-5205 (urethane elastomer manufactured by Dainippon Ink Co., Japan) | 18 |
| Nitrocellulose Cellunova Ex-2 (nitrocellulose manufactured by Asahi Kasei Co., Japan) | 2 |
| Colonate L (trifunctional low molecular weight isocyanate compound manufactured by Nippon Polyurethane Co., Japan) | 2 |
| Methyl isobutyl ketone | 146 |
| Toluene | 73 |

The above ingredients except Colonate L were mixed in a ball mill for 72 hours to disperse the ingredients. Then, Colonate L was added to the mixture and the mixture was mixed for additional 1 hour to obtain a magnetic composition. The magnetic composition was applied onto a polyester film (thickness: $10\mu$) in a thickness of 3.5 $\mu$ (in dry state). After drying of the composition and surface treatment, the film was cut in a fixed width to obtain a magnetic tape.

Example 2

A magnetic tape was prepared according to the same manner as in Example 1 except that the amount of Pandex T-5205 was changed from 18 parts to 16 parts and the amount of Nitrocellulose Cellunova EX-2 was changed from 2 parts to 4 parts.

71

0119619

Example 3

| Ingredients | Parts by Weight |
|---|---|
| Magnetic iron particles | 500 |
| Law molecular weight cellulosic resin (Cellunova EX-2 manufactured by Asahi Kasei Co., Japan) | 10 |
| Vinyl chloride-vinyl acetate copolymer (VAGH manufactured by U.C.C, U.S.A.) | 60 |
| Polyester polyol (Adeka New Ace YT-400 (average molecular weight: 400, hydroxyl number: 580) manufactured by Asahi Denka Co.,Japan) | 11 |
| Polyisocyanate compound (Desmodule L-75 manufactured by Bayer, Germany) | 29 |
| Methyl isobutyl ketone | 350 |
| Cyclohexanone | 350 |
| Toluene | 350 |

The above ingredients except the polyisocyanate compound were placed in a ball mill and mixed for 48 hours to disperse the ingredients. The polyisocyanate compound was added to the mixture and the mixture was mixed for additional 1 hour and discharged from the mill to obtain a magnetic composition.

The resulting magnetic composition was applied onto a polyester base film (thickness: 15 $\mu$m) in a thickness of 5 $\mu$m (in dry state). After orienting in a direct current magnetic field of 3 KOe, the composition was heated and dried (cured) and the resulting film was subjected to calendering. The film was slitted into in a width of 0.5 inch to obtain a video tape.

Example 4

A video tape was prepared according to the same manner as in Example 3 except that 12 parts of a polyether polyol (Sannix TP-400 (average molecular weight: 400, hydroxyl number: 430) manufactured by Sanyo Kasei Co., Japan) was substituted for the polyester polyol and the amount of the polyisocyanate compound was changed to 28 parts.

Example 5

A video tape was prepared according to the same manner as in Example 3 except that 60 parts of a polyester resin (Biron 300 manufactured by Toyo Boseki KK, Japan) was substituted for the vinyl chloride-vinyl acetate copolymer.

Reference Example 1

A magnetic tape was prepared according to the same manner as in Example 1 except that the same amount of Nitrocellulose H 1/4 was substituted for Nitrocellulose Cellunova Ex-2.

Reference Example 2

A magnetic tape was prepared according to the same manner as in Example 1 except that 12 parts of Nitrocellulose H 1/2 was substituted for Nitrocellulose Cellunova EX-2.

Reference Example 3

A video tape was prepared according to the same manner as in Example 3 except that the low molecular weight cellulosic resin was not added.

When the weight-average molecular weight of each nitrocellulose used in the above Examples and Reference Examples were measured according to the following conditions, Nitrocellulose Cellunova EX-2 was 23,900; Nitrocellulose H 1/4 was 53,000 and Nitrocellulose H 1/2 was 71,000.

Conditions for measuring weight-average
molecular weight

Apparatus: Gel permeation chromatograph, GPC-244 (Waters)

Data processing: GPC data processing system (TRC)

Column: TSK-GEL-GMH$_6$ (2)

Developing solvent: Tetrahydrofuran

Flow rate: 2 ml/min

Temperature: 25°C

Sample

Concentration: 0.2 % (w/v)

Solubility: Completely soluble

Filtration: 0.5 $\mu$-FHLP Filter (Millipore)

Injection volume: 0.5 ml

Detector: Differential refractometer R-401 (Waters)

Calibration of molecular weight: polystyrene standard

Further, viscosity of each magnetic composition as well as surface smoothness and sensitivity of the magnetic layer of each magnetic tape prepare in the above Examples and Reference Examples were determined.  Surface smoothness and sensitivity were determined as follows:

### Surface smoothness

Surface roughness of the magnetic layer (C.L.A.) was determined by using a feeler-type roughness gauge under conditions of feeler speed of 0.06 cm/sec and cut-off of 0.08 mm.  Surface smoothness was evaluated by the relative value based on C.L.A. value of the sample of Example 1 and calculated from the following formula:

$$\text{Relative value} = 10 \log \frac{\text{C.L.A. value of the sample of Example 1}}{\text{C.L.A. value of the each sample}}$$

### Sensitivity

By taking the output power of the sample of Example 1 as 0 dB, the output power (dB) of each sample at 5 MHz was determined.

### Elasticity modulus of magnetic layer

The elasticity modulus of the sample of the entire tape (length: 10 cm) was measured at the stress rate of 20 mm/min.  Likewise, the elasticity modulus of the polyester base film was measured.  From the both elasticity moduli, the elasticity modulus of the magnetic layer was calculated according to the following formula:

$$\text{Elasticity modulus of magnetic layer} = \frac{(dM + dB)\ Et - dB\ Eb}{dM}$$

wherein dM is the thickness of the magnetic layer (cm); dB is the thickness of the polyester base film (cm); Et is the elasticity modulus of the entire tape; and Eb is the elasticity modulus of the polyester base film.

0119619

The elasticity modulus of the magnetic layer was evaluated by the relative value based on the elasticity modulus of the sample of Example 1 and calculated from the following formula:

$$\text{Relative value} = 10 \log \frac{\text{Elasticity modulus of the magnetic layer of each sample}}{\text{Elasticity modulus of the magnetic layer of Example 1}}$$

The results are shown in Table 1.

Table 1

| Examples | Viscosity (poise) | Surface smooth-ness | Sensitivity (dB) | Elasticity modulus |
|---|---|---|---|---|
| Example 1 | 9 | 0 | 0 | 0 |
| Example 2 | 8 | 0 | 0 | +0.2 |
| Example 3 | 5 | +0.7 | +0.8 | +3.0 |
| Example 4 | 5 | +0.6 | +0.6 | +2.8 |
| Example 5 | 4 | +0.2 | +0.2 | +2.4 |
| Reference Example 1 | 40 | -0.5 | -0.5 | +0.2 |
| Reference Example 2 | * | — | — | — |
| Reference Example 3 | 4 | -0.3 | -0.2 | +2.8 |

* : Gelation

As is seen from Table 1, no gelation and increase of viscosity are observed in each magnetic composition prepared in Examples 1 to 5 and surface smoothness and sensitivity of each magnetic recording medium of the present invention thus prepared are superior to those of the Reference Examples. Thus, it is apparent that the magnetic recording medium of the present invention is excellent in dispersibility of magnetic particles and surface smoothness of the magnetic layer and has improved electromagnetic transducing properties.

What is claimed is:

1. A magnetic recording medium comprising a substrate and a magnetic coat provided on the surface of the substrate, said magnetic coat being composed of magnetic particles dispersed in a binder ingredient, and a part of said binder ingredient being a cellulosic resin having a weight-average molecular weight of not more than 40,000.

2. A magnetic recording medium according to claim 1, wherein said cellulosic resin is nitrocellulose.

3. A magnetic recording medium according to claim 1, wherein the remainder of said binder ingredient includes at least one polymer material selected from the group consisting of polyurethane resins, acrylonitrile-butadiene copolymer resins, chlorinated rubber, polyester resins, polyamide resins, epoxy resins and vinyl chloride resins.

4. A magnetic recording medium according to claim 3, wherein said binder ingredient is a mixture of a low molecular weight nitrocellulose having a weight-average molecular weight of not more than 40,000 and at least one polymer material selected from the group consisting of polyurethane resins, acrylonitrile-butadiene copolymer resins, chlorinated rubber, polyester resins, polyamide resins, epoxy resins and vinyl chloride resins, and the weight ratio of the nitrocellulose : the polymer material is 1 : 95 to 25 : 75.

5. A magnetic recording medium according to claim 3, wherein the polymer material is a polyurethane resin which is formed in said magnetic coat by mixing and

- 18 -

0119619

dispersing a low molecular weight polyol and an isocyanate compound in the presence of magnetic particles to react them.

6. A magnetic recording medium according to claim 5, wherein the average molecular weight of the polyol is not more than 700 and the hydroxyl number thereof is not less than 200.

7. A magnetic recording medium according to claim 5, wherein the weight ratio of the polyol: the isocyanate compound is 3 : 1 to 1 : 7.

**European Patent Office**

**EUROPEAN SEARCH REPORT**

Application number

---

| DOCUMENTS CONSIDERED TO BE RELEVANT | | | EP 84102978.8 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | US - A - 4 238 548 (OKUYAMA)<br>* Abstract; claims 1,4 * | 1,2 | G 11 B 5/70 |
| Y | | 3-7 | |
| Y | US - A - 4 076 890 (YAMADA)<br>* Column 2, line 30 - column 4, line 28 * | 3,4 | |
| Y | US - A - 4 328 282 (LEHNER)<br>* Abstract; claims 1,3 * | 5-7 | |
| A | DE - A1 - 3 222 778 (TDK)<br>* Abstract; fig. 1 * | 1,2 | |
| X | DE - A1 - 2 920 015 (TDK)<br>* Claim 1 * | 1,2 | |

**TECHNICAL FIELDS SEARCHED (Int. Cl. ³)**

G 11 B    5/00
H 01 F    1/00
H 01 F  10/00

The present search report has been drawn up for all claims

| Place of search | Date of completion of the search | Examiner |
|---|---|---|
| VIENNA | 18-06-1984 | BERGER |